Europäisches Patentamt

European Patent Office

Office européen des brevets

(19)

(11) Veröffentlichungsnummer: **0 043 503**
**B1**

## (12) EUROPÄISCHE PATENTSCHRIFT

(45) Veröffentlichungstag der Patentschrift:
08.06.83

(51) Int. Cl.³: **C 08 K 3/22**, C 08 J 7/12,
C 08 L 77/00

(21) Anmeldenummer: **81104885.9**

(22) Anmeldetag: **24.06.81**

(54) **Verfahren zur Erhöhung der Oberflächenleitfähigkeit von organischen Polymeren.**

(30) Priorität: **05.07.80 DE 3025605**

(43) Veröffentlichungstag der Anmeldung:
**13.01.82 Patentblatt 82/2**

(45) Bekanntmachung des Hinweises auf die Patenterteilung:
**08.06.83 Patentblatt 83/23**

(84) Benannte Vertragsstaaten:
**DE FR GB IT**

(56) Entgegenhaltungen:
**keine**

(73) Patentinhaber: **BAYER AG, Zentralbereich Patente, Marken und Lizenzen, D-5090 Leverkusen 1, Bayerwerk (DE)**

(72) Erfinder: **Weber, Gunter, Dr., Buschstrasse 169, D-4150 Krefeld (DE)**
Erfinder: **Kuntze, Doris, Bönnersweg 26, D-4150 Krefeld (DE)**
Erfinder: **Stix, Wolfgang, Dr., Breslauer Strasse 31, D-4150 Krefeld 11 (DE)**

## Verfahren zur Erhöhung der Oberflächenleitfähigkeit von organischen Polymeren

Die Erfindung betrifft ein Verfahren zur Erhöhung der Oberflächenleitfähigkeit von organischen Homo- und Copolymeren sowie Polymerblends, die Carbonamid- und/oder Urethan- und/oder Hydroxylgruppen enthalten.

Organische Polymere sind in der Regel Isolatoren mit spezifischen elektrischen Leitfähigkeiten unter $10^{-14}$ Ohm $^{-1}$ cm$^{-1}$. Sie neigen zu elektrostatischen Aufladungen. Zur Erhöhung der elektrischen Leitfähigkeit werden den polymeren Werkstoffen leitfähige Zusätze (Graphit, Russ, Leitsilber) oder spezielle Antistatikzusätze beigemischt. Diese Zusätze verlieren jedoch teilweise mit der Zeit ihre Wirksamkeit und verschlechtern meist die Eigenschaften des Polymers. Bekannt ist auch die Zugabe bestimmter organischer Polymerer mit partieller Bildung von Radikalionen, die starre Stapel aus Donator-Akzeptor-Gebilden aufbauen, was zu Ladungsübertragungs- (Charge Transfer, CT-) Komplexen führt [Übersichtsartikel in Endeavour XXXIV, 123 (1975), 123/130]. Durch solche Zusätze werden aber die erwünschten Polymereigenschaften, wie beispielsweise die leichte Verarbeitbarkeit, die Elastizität, die Herstellbarkeit, der günstige Preis, stark negativ beeinflusst.

Aufgabe der Erfindung ist es, die Leitfähigkeit, insbesondere die Oberflächenleitfähigkeit von organischen Polymeren, zu erhöhen, ohne die erwünschten Polymereigenschaften zu sehr zu verschlechtern.

Es wurde nun gefunden, dass durch die Anlagerung von bestimmten Schwermetalloxiden unter reduzierenden Bedingungen in einfacher Weise die Oberflächenleitfähigkeit erhöht werden kann. Gegenstand der Erfindung ist ein Verfahren zur Erhöhung der Oberflächenleitfähigkeit, das dadurch gekennzeichnet ist, dass man ein Schwermetalloxid, das in einer hohen Oxidationsstufe vorliegt und in seiner reduzierten Form eine stabile Verbindung mit den Carbonamid- und/oder Urethan- und/oder Hydroxylgruppen des Polymeren eingeht, unter reduzierenden Bedingungen auf das Polymere einwirken lässt. Besonders geeignet ist eine wässrige Lösung von Osmiumtetroxid in Formalin.

Die erfindungsgemäss hergestellten Polymeren mit erhöhter Leitfähigkeit zeigen ein ähnliches plastisches Verhalten wie die unbehandelten Polymeren und sind prinzipiell in gleicher Weise anwendbar wie anorganische Halbleiter. Sie können als leitfähige Fasern, Folien, Überzüge und Formkörper vorliegen. Die Leitfähigkeit ist temperatur- und druckabhängig und durch Licht zu beeinflussen. Die Polymeren können daher als Flächenheizleiter, photothermische Wandler, Widerstandsthermometer, Druckschalter, zur Herstellung von Elektroden, leitfähigen Verbindungen und ähnlichem verwendet werden. Elektrostatische Aufladungen an polymeren Formkörpern, Folien, Fasern, Überzügen u.a. lassen sich vermeiden.

Die Erfindung ist im folgenden weiter beispielhaft beschrieben.

1. Änderung des Oberflächenwiderstandes von Polyamidfolien

Eine Polyamid-6-Probe (PA-6) wird 63 Stunden in einem Gemisch aus gleichen Teilen 30% Formalin und 1%iger wässriger Osmiumtetroxidlösung gelagert. Der Oberflächenwiderstand wird mit federnden Metallschneide-Elektroden nach DIN 53 482 gemessen. Vor der Behandlung beträgt der Oberflächenwiderstand $4 \times 10^{12}$ Ohm, nach der Behandlung liegt er zwischen 250 und 350 Ohm.

2. Änderung der elektrischen Leitfähigkeit einer Folie im Temperaturbereich zwischen 100 und -100°C

Bei dem erfindungsgemässen Verfahren nach Beispiel 1 dringt das Schwermetalloxid nur einige µm von der Oberfläche in die Probe ein, so dass ausserhalb der beladenen Oberflächenschicht die ursprünglich niedrige elektrische Leitfähigkeit der Probe erhalten bleibt. Ein Vergleich der Temperaturabhängigkeit der elektrischen Leitfähigkeit (reziproker spezifischer Widerstand) einer unbehandelten Polyamid-6-Probe (PA-6) in Form einer 50 µm dicken Folie mit einer gleichfalls 50 µm dicken PA-6-Folie, die wie im Beispiel 1 mit Osmiumtetroxid behandelt worden ist, ergibt: Bei der unbehandelten Probe steigt die Leitfähigkeit von $10^{-16}$ Ohm$^{-1}$ cm$^{-1}$ bei -100°C auf etwa $10^{-12}$ Ohm$^{-1}$ cm$^{-1}$ bei 100°C an. Dabei tritt bei 72°C ein starker Knick auf durch das Einsetzen der molekularen Bewegung bei der Glastemperatur des PA-6.

Die Temperaturabhängigkeit der mit Osmiumtetroxid behandelten Probe wird in einer halblogarithmischen Darstellungen über der reziproken absoluten Temperatur in dem gleichen Bereich dagegen durch eine Gerade wiedergegeben; dabei steigt die Leitfähigkeit von $10^{-14}$ auf $10^{-11}$ Ohm$^{-1}$ cm$^{-1}$.

3. Photothermischer Wandler

Die nach dem erfindungsgemässen Verfahren behandelten Polyamidfolien eignen sich auch als Sonnenkollektor, d.h. sie wandeln recht einfach und effektiv die Sonnenstrahlung in Niedertemperaturwärme um.

Die verwendete Versuchsanordnung besteht aus einem Einscheibenkollektor, einer Strahlungsquelle, einer Durchflussregelung (0,5–4 l/h) und einer Möglichkeit zur Temperaturaufzeichnung. Die nach dem erfindungsgemässen Verfahren kontrastierten Folien wurden mittels einer Wärmeleitpaste direkt an den Kollektor angekoppelt und mit einer Lampe bestrahlt, die UV-Strahlung durch einen Quecksilberhochdruckbrenner, visuelle und IR-Strahlung durch eine Wolfram-Glühwendel erzeugt. Demgegenüber muss der bei den herkömmlichen Anordnungen für photothermische Wandler benutzte Schwarzlack auf einem Kupferblech (Dicke ca. 100 μm) eingebrannt und dann an den Kollektor angekoppelt werden. Die mit Osmiumtetroxid nach dem erfindungsgemässen Verfahren kontrastierten, schwarz gefärbten PA-6-Folien werden auf einer Heizplatte mit einem Lack als Haftträger befestigt und mit der oben genannten Lampe bestrahlt.

Nach ca. 30 min. Bestrahlungszeit bei einer Durchflussmenge von 0,5 l/h stellt sich ein stationärer Zustand ein, bei dem die Temperaturerhöhung ca. 10°C beträgt. Dieses Ergebnis ist vergleichbar mit einem Schwarzlack, der 5% Russ (FW 200) in Acrylatharz enthält.

Bei der nicht erfindungsgemäss behandelten Polyamidfolie beträgt die Temperaturerhöhung bei gleicher Durchflussmenge im stationären Zustand nur 4°C.

Die Kontrastierung hat offenbar gleiches Strahlungsabsorptionsverhalten erzeugt wie bei Russ, zumal auch das spektrale Verhalten der beiden Proben identisch ist.

4. Verschiedene Polymere

Es hat sich gezeigt, dass sich auch bei Polyestern, Celluloseacetaten und Polyurethanen in gleicher Weise wie bei den Polyamiden nach dem erfindungsgemässen Verfahren die Oberflächenleitfähigkeit erhöhen lässt, resp. ein Einsatz der erfindungsgemäss behandelten Proben als photothermische Wandler möglich ist.

**Patentansprüche**

1. Verfahren zur Erhöhung der Oberflächenleitfähigkeit von organischen Homo- und Copolymeren sowie Polymerblends, die Carbonamid- und/oder Urethan- und/oder Hydroxylgruppen enthalten, dadurch gekennzeichnet, dass man ein Schwermetalloxid, das in einer hohen Oxidationsstufe vorliegt und in seiner reduzierten Form eine stabile Verbindung mit den Carbonamid- und/oder Urethan- und/oder Hydroxylgruppen des Polymeren eingeht, unter reduzierenden Bedingungen auf das Polymere einwirken lässt.

2. Verfahren nach Anspruch 1, dadurch gekennzeichnet, dass man eine wässrige Lösung von Osmiumtetroxid in Formalin auf die Polymerenoberfläche einwirken lässt.

3. Verfahren nach Anspruch 2, dadurch gekennzeichnet, dass die Konzentration der wässrigen Osmiumtetroxidlösung 0,2 bis 2 Gew.-% beträgt.

4. Verfahren nach Ansprüchen 2 oder 3, dadurch gekennzeichnet, dass als reduzierende Lösung eine 10 bis 50%ige wässrige Lösung von Formaldehyd eingesetzt wird.

**Claims**

1. Process for increasing the surface conductivity of organic homo- and co-polymers and of polymer blends containing carbonamide and/or urethane and/or hydroxyl groups, characterised in that a heavy metal oxide which is present in a high oxidation stage and which, in its reduced form, forms a stable compound with the carbonamide and/or urethane and/or hydroxyl groups of the polymer, is allowed to act on the polymer under reducing conditions.

2. Process according to Claim 1, characterised in that an aqueous solution of osmium tetroxide in formalin is allowed to act on the polymer surface.

3. Process according to Claim 2, characterised in that the concentration of the aqueous osmium tetroxide solution is 0.2 to 2% by weight.

4. Process according to Claims 2 or 3, characterised in that a 10 to 50% aqueous solution of formaldehyde is used as the reducing solution.

**Revendications**

1. Procédé pour élever la conductivité superficielle d'homopolymères et de copolymères organiques ainsi que de mélanges de polymères qui contiennent des groupes carbonamide et/ou uréthanne et/ou hydroxyle, caractérisé en ce qu'on fait agir sur le polymère, dans des conditons réductrices, un oxyde de métal lourd qui est présent à un degré élevé d'oxydation et qui, sous sa forme réduite, engendre un composé stable avec les groupes carbonamide et/ou uréthanne et/ou hydroxyle du polymère.

2. Procédé suivant la revendication 1, caractérisé en ce qu'on fait agir sur la surface du polymère une solution aqueuse de tétroxyde d'osmium dans la formaline.

3. Procédé suivant la revendication 2, caractérisé en ce que la concentration de la solution aqueuse de tétroxyde d'osmium s'élève à 0,2-2% en poids.

4. Procédé suivant les revendications 2 ou 3, caractérisé en ce qu'on utilise comme solution réductrice une solution aqueuse à 10-50% de formaldéhyde.